# FASCICULE DE BREVET EUROPEEN

(11) **EP 4 294 698 B1**
(45) Date de publication et mention de la délivrance du brevet: **04.12.2024**
(21) Numéro de dépôt: 22708517.2
(22) Date de dépôt: 15.02.2022
(51) Int. Cl.: B62B 19/02, B62B 9/00

(54) **ACCESSOIRE DE GLISSE POUR UNE POUSSETTE, AINSI QU'ENSEMBLE DE TRANSPORT COMPORTANT UNE POUSSETTE ET AU MOINS UN TEL ACCESSOIRE DE GLISSE**
SCHIEBEZUBEHÖR FÜR EINEN KINDERWAGEN UND TRANSPORTANORDNUNG MIT EINEM KINDERWAGEN UND MINDESTENS EINEM SOLCHEN SCHIEBEZUBEHÖR
SLIDING ACCESSORY FOR A STROLLER, AND TRANSPORT ASSEMBLY COMPRISING A STROLLER AND AT LEAST ONE SUCH SLIDING ACCESSORY

(30) Priorité: 16.02.2021 FR 2101485
(43) Date de publication de la demande: 27.12.2023
(73) Titulaire: BABYZEN, 13100 Aix-en-Provence (FR)
(72) Inventeur: CHAUDEURGE, Jean-Michel, 83170 Tourves (FR)
(74) Mandataire: Lavoix
(86) Numéro de dépôt international: PCT/EP2022/053595
(87) Numéro de publication internationale: WO 2022/175231

(56) Documents cités:
- GB-A- 2 195 106
- JP-A- 2020 026 260
- JP-U- H0 681 867

## Description

La présente invention concerne un accessoire de glisse pour une poussette. Elle concerne également un ensemble de transport, comportant une poussette et au moins un tel accessoire de glisse.

L'invention a trait à la problématique de transporter un enfant en poussette sur un sol enneigé. En effet, durant plusieurs semaines de période hivernale, les utilisateurs de poussette résidant sous certaines latitudes, mais également ceux férus des sports d'hiver, doivent affronter cette problématique, dans le sens où il est très difficile et peut être dangereux de faire rouler une poussette sur un sol enneigé, du fait de l'enfoncement des roues de la poussette, en particulier des roues avant, dans la neige. De plus, les utilisateurs de poussette font face à la difficulté supplémentaire que les sols enneigés alternent souvent avec un sol « roulant » dur, c'est-à-dire non enneigé, par exemple un sol abrité sous une structure couverte ou à l'intérieur d'une structure fermée, telle qu'un centre commercial.

L'invention s'intéresse ainsi plus spécifiquement aux accessoires de poussette prévus pour glisser sur la neige ou, plus généralement, sur un sol ayant des caractéristiques similaires à celles d'un sol enneigé. Deux solutions, non totalement satisfaisantes, sont actuellement disponibles sur le marché.

Une première solution consiste en un accessoire polyvalent, dans le sens où il est conçu pour être utilisé sur divers modèles de poussette existants. Cet accessoire comporte une semelle allongée, formant patin de ski, sur la face supérieure de laquelle est prévue une cellule conçue pour être solidarisée de manière amovible à une roue de la poussette. Cette cellule comporte par exemple des mâchoires, des sangles, des crochets, des arceaux, etc., c'est-à-dire, plus généralement, des éléments mécaniques mobiles qui doivent être manipulés par l'utilisateur, souvent à l'aide d'outils, de manière à s'harnacher solidement à la roue de la poussette. JP 2020 026260 en fournit un exemple. Ainsi, JP 2020 026260 divulgue un accessoire de glisse qui peut être utilisé sur divers dispositifs de transport de personne, notamment sur un fauteuil roulant. Cet accessoire de glisse comporte une semelle, en forme de ski, et une cellule conçue pour être fixée à la semelle et pour recevoir la portion basse d'une roue du dispositif de transport de personne, afin d'être solidarisée de manière amovible à cette roue. La cellule comporte une paroi de fond et des parois latérales, respectivement gauche et droite. Les faces internes respectives des parois latérales sont chacune pourvues d'un support de roue qui comprend une succession d'éléments saillants. Lorsque l'accessoire de glisse est utilisé, les supports de roue se retrouvent agencés à l'intérieur du pneumatique de la roue et prennent fermement en sandwich entre eux la jante de la roue, en absorbant les secousses latérales. Pour ce faire, les parois latérales précitées sont, à l'avant et à l'arrière de la cellule, reliées l'une à l'autre par des vis de verrouillage qui, lors de leur serrage, contraignent les parois latérales l'une vers l'autre, jusqu'à prendre en sandwich la portion basse de la roue.

Dans la pratique, la manipulation de ces éléments mécaniques mobiles est longue et fastidieuse, en étant à répéter au moins pour chaque roue avant de la poussette et en étant souvent très inconfortable pour l'utilisateur, d'autant que cette mise en place est généralement à opérer en plein air et par temps froid. Bien entendu, lorsqu'il s'agira de retirer le ou les accessoires de glisse de chacune des roues précédemment harnachées, l'utilisateur doit affronter la même complexité pour déposer tout l'attirail mécanique des accessoires de glisse, cet attirail s'avérant alors encombrant à stocker et charrier afin de pouvoir poursuivre le cheminement de la poussette sur un sol dur.

Une seconde solution, plus radicale, est d'utiliser une poussette dont la ou les roues avant sont conçues pour être totalement dégagées du reste de la poussette et être remplacées par autant de dispositifs de glisse, comprenant chacun un ski surmonté d'un moyen de pivotement directionnel. Ces dispositifs de glisse sont onéreux et, en dehors de leur utilisation effective, sont lourds et encombrants à stocker et charrier avec la poussette encore munie de sa ou ses roues avant. De plus, lorsque le ou les dispositifs de glisse sont à installer sur la poussette en remplacement de la ou des roues avant, les manipulations sont particulièrement fastidieuses puisque l'utilisateur se voit contraint de maintenir durablement l'avant de la poussette en lévitation haute pour opérer le remplacement, alors même que la poussette est généralement en charge d'un enfant.

De son côté, GB 2 195 106 propose une approche alternative, en divulguant un accessoire de glisse pour une poussette. Cet accessoire de glisse est conçu pour être monté sur, à la fois, la roue avant et la roue arrière situées d'un même côté latéral d'une poussette. L'accessoire de glisse comporte un corps principal en forme de gouttière, qui, à l'avant, est façonné en un crochet et qui, à l'arrière, est équipé d'une pince dont les mâchoires forment entre elles une cavité à section circulaire. Afin de retenir l'accessoire de glisse aux roues avant et arrière, la roue avant est d'abord logée à l'intérieur du crochet précité, puis le bord de la roue arrière est introduit en force entre les mâchoires de la pince jusqu'à être reçu dans la cavité précitée. Les mâchoires piègent alors le bord de la roue arrière à l'intérieur de la cavité, en autorisant un débattement transversal entre eux, aussi bien verticalement qu'horizontalement.

Quant à JP H06 81867 U, il propose un accessoire de glisse pour un panier course, qui est plus rudimentaire et qui est conçu pour n'enserrer les flancs d'une roue que suivant deux lignes de contact horizontales. La retenue de la roue est sommaire, ce qui rend douteuse la viabilité d'utilisation de cet accessoire sur une poussette.

Le but de la présente invention est de proposer un nouvel accessoire de glisse pour poussette, qui, à l'usage, est simple, efficace, et pratique.

A cet effet, l'invention a pour objet un accessoire de glisse pour une poussette, tel que défini à la revendication 1.

Une des idées à la base de l'invention est de pouvoir réversiblement solidariser et désolidariser l'accessoire de glisse conforme à l'invention à une roue de poussette de manière instantanée, en particulier sans utiliser d'outil ni ajouter ou entraîner des pièces mécaniques mobiles, tout en garantissant la fiabilité et la sécurité de la solidarisation de l'accessoire de glisse à la roue. Pour ce faire, l'invention met à profit la capacité de compression élastique du bandage de la roue, autrement appelé bande de roulement, ce bandage pouvant aussi bien être massif, en particulier moussé, que pourvu d'une chambre à air mise sous pression. Dans tous les cas, le bandage forme une garniture externe de la roue et est supporté par une jante de cette dernière, en formant deux bourrelets annulaires qui débordent légèrement de la jante sur les côtés latéraux respectifs de la roue. Selon l'invention, l'accessoire de glisse délimite fixement un logement qui, en considérant que la semelle de l'accessoire de glisse est posée sur un sol horizontal, est ouvert vers le haut afin de pouvoir y engager/dégager la roue suivant des mouvements verticaux. Ce logement est fermé vers le bas par une paroi de fond et latéralement par deux parois latérales en regard l'une de l'autre, respectivement gauche et droite en considérant la direction longitudinale antéropostérieure de la semelle. Sur son côté tourné vers l'autre paroi, chaque paroi intègre un relief saillant qui est conçu, notamment de par sa forme et ses dimensions, pour interférer par contact avec le bandage de la roue, en particulier les bourrelets de ce dernier, lorsque la roue est engagée/dégagée verticalement vis-à-vis du logement. Ainsi, plus précisément, lorsque l'utilisateur souhaite solidariser l'accessoire de glisse à la roue, il engage cette roue verticalement vers le bas dans le logement, en particulier après avoir légèrement soulevé la partie de la poussette où est la roue et placé à l'aplomb de cette dernière l'accessoire de glisse posé sur le sol, si bien que, successivement, le bandage, en particulier les bourrelets de ce dernier, est amené au contact des reliefs, puis est comprimé élastiquement pour franchir ces reliefs vers le bas, puis est au moins partiellement décomprimé une fois que les reliefs sont franchis, le bandage de la roue se retrouvant alors appuyé vers le bas contre la paroi de fond du logement par les reliefs. L'accessoire de glisse est alors en configuration opérationnelle, en étant solidaire de la roue et prêt à assurer la glisse de cette dernière et, par-là, de la poussette sur un sol enneigé de manière efficace et sécurisée, y compris en virage dès lors que la ou chacune des roues avant de la poussette, ainsi équipée de l'accessoire de glisse, est pivotante par rapport au châssis de la poussette. Lorsque l'utilisateur souhaite ensuite désolidariser de la roue l'accessoire de glisse pour passer ce dernier en configuration inopérationnelle, l'utilisateur dégage la roue verticalement vers le haut vis-à-vis du logement, en particulier en maintenant l'accessoire plaqué contre le sol à l'aide de ses pieds placés sur la semelle, tout en soulevant légèrement la zone de la poussette où est la roue, si bien que, successivement, le bandage, en particulier les bourrelets de ce dernier, est comprimé élastiquement par les reliefs pour franchir ces derniers vers le haut, puis se relâche une fois les reliefs franchis. La roue de la poussette est alors libérée de l'accessoire de glisse et prête à assurer le roulement de la poussette sur un sol dur, non enneigé. En pratique, les reliefs précités peuvent présenter des formes de réalisation diverses et peuvent avantageusement intégrer des aménagements optionnels qui en améliorent ou facilitent les effets, comme détaillé par la suite. Dans tous les cas, les manipulations de l'accessoire de glisse et de la poussette pour passer l'accessoire de glisse entre ses configurations inopérationnelle et opérationnelle sont particulièrement faciles, pratiques et instantanées, en ne prenant que quelques secondes, en n'utilisant aucun outil et en n'entraînant aucune pièce mécanique qui serait mobile au sein de l'accessoire de glisse. De plus, l'accessoire de glisse conforme à l'invention n'altère en rien l'efficacité du système de suspension de la poussette puisqu'il ne contraint pas la variation de l'empattement des trains de roues. D'autres avantages et aménagements optionnels avantageux de l'accessoire de glisse, notamment en lien avec la résistance, la fabrication et la sécurité de cet accessoire de glisse, ressortiront dans la suite du présent document.

Des caractéristiques additionnelles avantageuses de l'accessoire de glisse conforme à l'invention sont spécifiées aux revendications 2 à 11.

L'invention a également pour objet un ensemble de transport, tel que défini à la revendication 12. Des caractéristiques additionnelles avantageuses de l'ensemble de transport conforme à l'invention sont spécifiées aux revendications 13 à 15.

L'invention sera mieux comprise à la lecture de la description qui va suivre, donnée uniquement à titre d'exemple et faite en se référant aux dessins sur lesquels :
[Fig. 1] la figure 1 est une vue en perspective d'un ensemble de transport conforme à l'invention ;
[Fig. 2] la figure 2 est une vue en perspective d'une partie avant d'une poussette et de deux accessoires de glisse, qui appartiennent à l'ensemble de transport de la figure 1, l'un de ces accessoires de glisse étant montré dans une configuration opérationnelle tandis que l'autre accessoire de glisse est montré dans une configuration inopérationnelle ;
[Fig. 3] la figure 3 est une coupe partielle selon le plan III de la figure 2 ;
[Fig. 4] la figure 4 est une coupe selon la ligne IV-IV de la figure 3 ;
[Fig. 5] la figure 5 est une vue en perspective de l'un des accessoires de glisse de la figure 2, montré seul ;
[Fig. 6] la figure 6 est une coupe selon le plan VI de la figure 5 ;
[Fig. 7] [Fig. 8] [Fig. 9] [Fig. 10] les figures 7 à 10 sont des vues respectivement similaires aux figures 5, 6, 3 et 4, qui illustrent un autre mode réalisation d'un accessoire de glisse conforme à l'invention ; et
[Fig. 11] la figure 11 est une vue en perspective des accessoires de glisse du mode de réalisation des figures 7 à 10, agencés tête bêche l'un par rapport à l'autre.

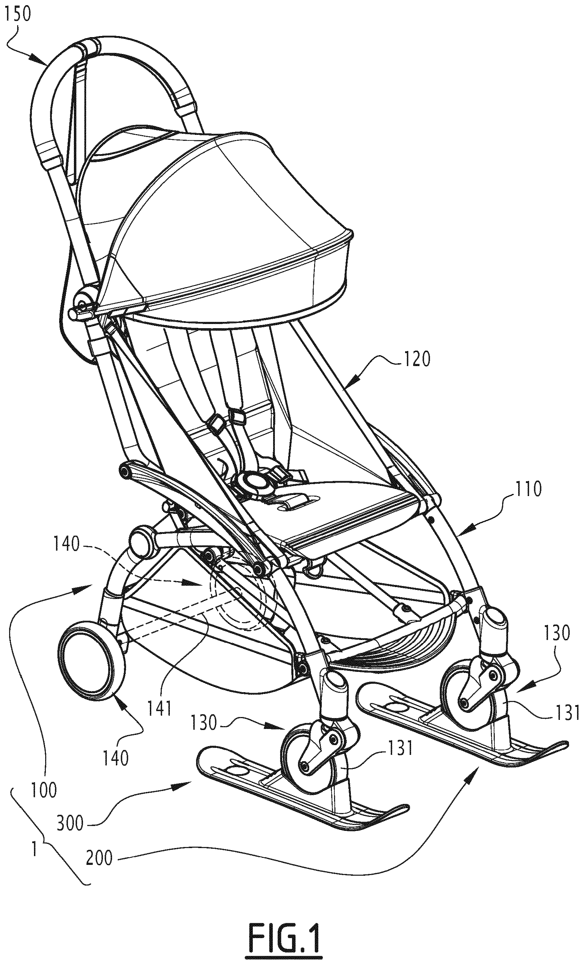

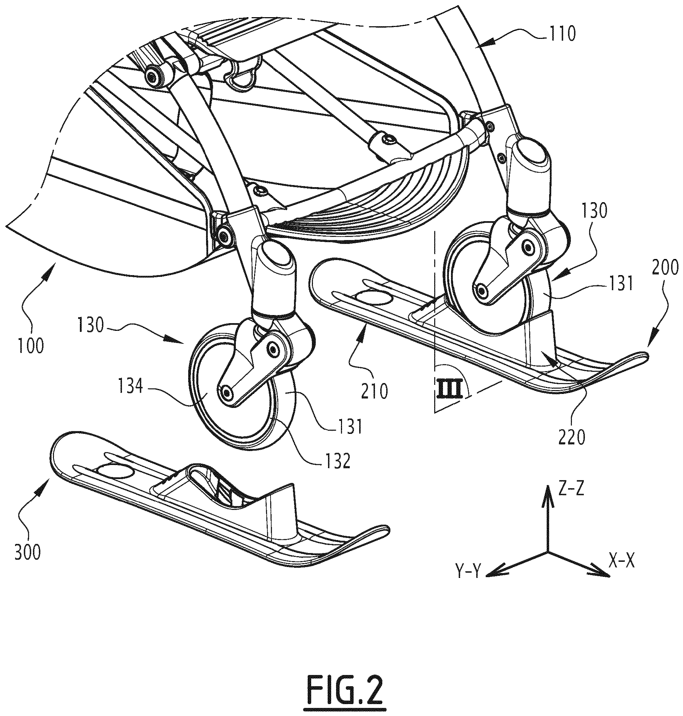

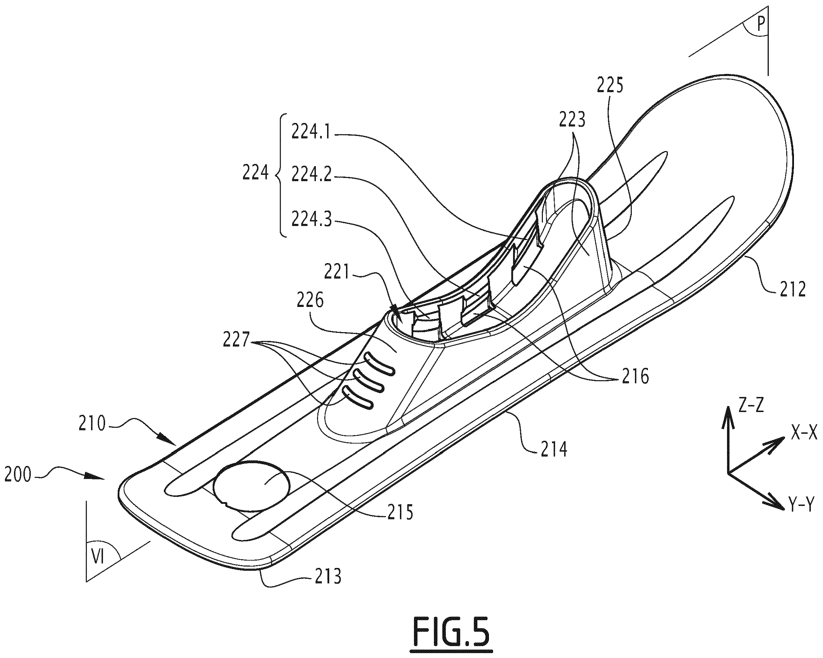

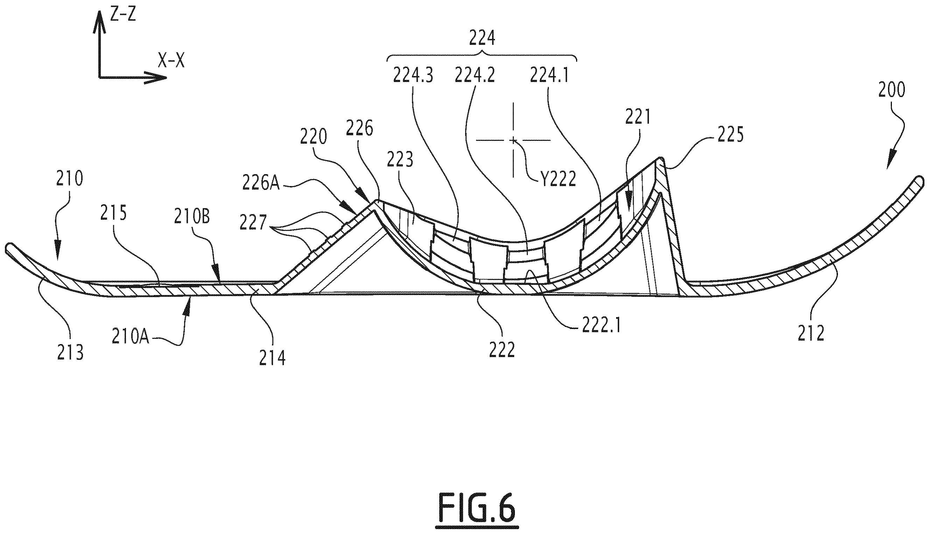

Sur les figures 1 à 4 est représenté un ensemble de transport 1 comportant une poussette 100, ainsi que deux accessoires de glisse 200 et 300 qui, comme expliqué plus en détail par la suite, permettent de transporter un enfant installé dans la poussette 100 sur un sol enneigé, en faisant glisser au moins l'avant de la poussette 100 sur la neige. Sur la figure 1, les accessoires de glisse 200 et 300 sont solidarisés à la poussette 100 tandis que, sur la figure 2, seul l'accessoire de glisse 200 est solidarisé avec la poussette alors que l'accessoire de glisse 300 est désolidarisé de la poussette. Sur les figures 5 et 6, l'accessoire de glisse 200 est représenté seul.

Avant de décrire en détail les accessoires de glisse 200 et 300 et la façon de les solidariser/désolidariser à la poussette 100, on va décrire plus avant la poussette 100, étant remarqué que cette poussette 100 peut typiquement relever de ce qui est connu.

La poussette 100 comporte un châssis 110. Ce châssis 110 définit une direction antéropostérieure, dans le sens où deux parties du châssis 110, qui sont opposées l'une à l'autre suivant cette direction antéropostérieure, correspondent respectivement à une partie avant du châssis, qui est tournée vers l'avant lorsque la poussette 100 est poussée vers l'avant, et une partie arrière du châssis, qui est tournée vers l'arrière lorsque la poussette 100 est poussée vers l'avant. Dans l'exemple de réalisation considéré sur les figures, le châssis 110 présente une structure tubulaire, réalisée principalement par assemblage de tubes.

Quelle que soit sa forme de réalisation, le châssis 110 est conçu pour, en service, supporter un organe de réception 120 permettant de réceptionner un enfant à transporter par la poussette 100, l'enfant étant installé dans cet organe de réception 120 en position assise, en position couchée ou dans une position intermédiaire entre ces dernières. Ainsi, l'organe de réception 120 est choisi parmi un siège, une nacelle, un couffin, etc., la forme de réalisation de l'organe de réception 120 n'étant pas limitative de l'invention. D'ailleurs, de manière connue en soi et non détaillée, le châssis 110 est avantageusement prévu pour permettre d'interchanger l'organe de réception 120, notamment selon l'âge de l'enfant à transporter.

La poussette 100 comporte également des roues, qui, en service, s'appuient et roulent sur le sol dès lors que ce dernier est suffisamment dur. Ces roues sont agencées dans la région basse du châssis 110 afin de supporter ce dernier vis-à-vis du sol. Comme bien visible sur les figures 1 et 2, ces roues incluent une ou plusieurs roues avant 130 et des roues arrière 140. Dans l'exemple de réalisation des figures, deux roues avant 130 sont ainsi prévues, à savoir une roue avant gauche, une roue avant droite qui sont situées respectivement sur les côtés gauche et droit du châssis 110, et deux roues arrière 140 sont prévues, à savoir une roue arrière gauche et une roue arrière droite qui sont respectivement situées sur les côtés gauche et droit du châssis 110.

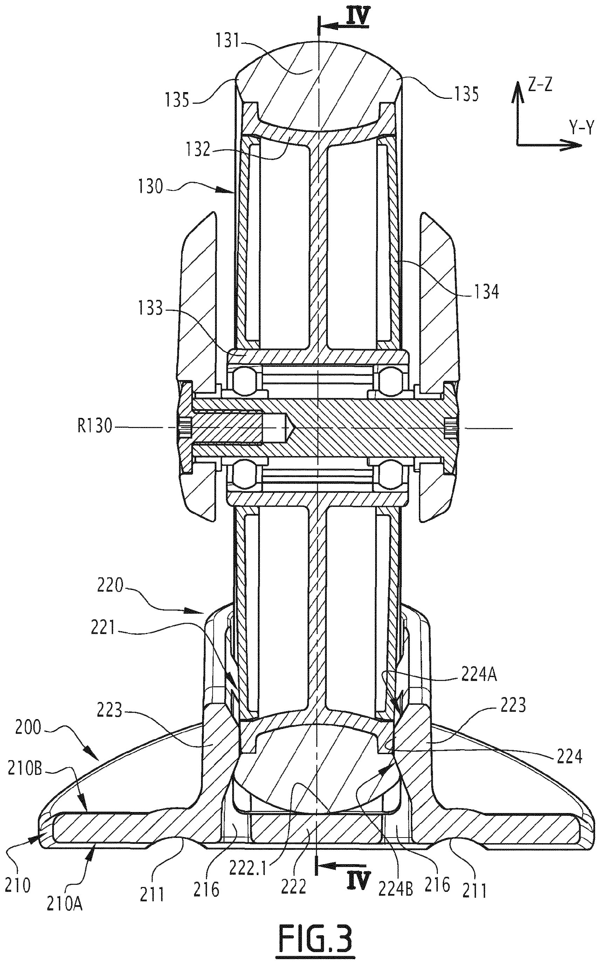

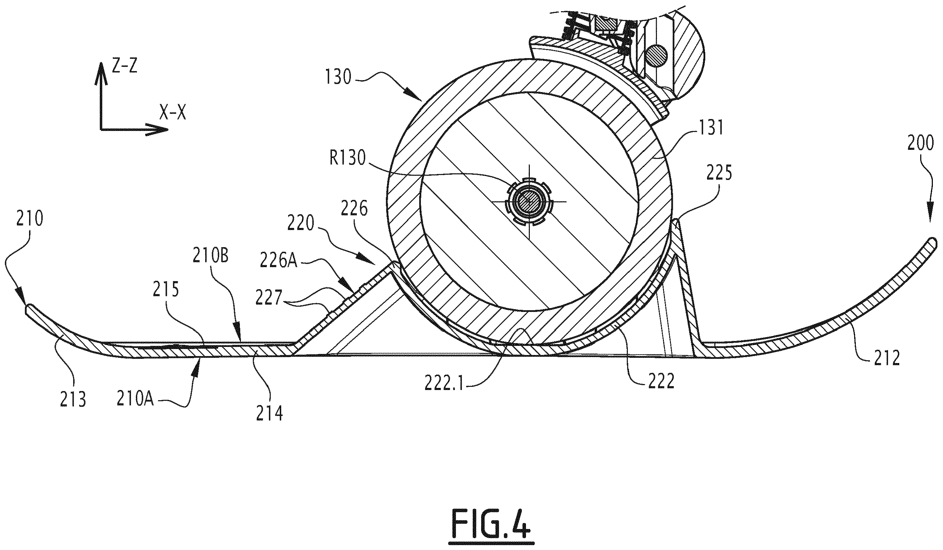

Comme bien visible sur les figures 3 et 4, chacune des roues avant 130 définit un axe de rotation R130 autour duquel la roue avant tourne sur elle-même pour rouler sur le sol dès lors que ce dernier est suffisamment dur. En service, les axes de rotation respectifs R130 des roues avant 130 s'étendent de manière sensiblement parallèle au sol. Chacune des roues avant 130 est montée sur une partie avant du châssis 110, en étant avantageusement reliée à cette partie avant du châssis de manière librement pivotante autour d'un axe de pivotement qui s'étend de manière radiale ou orthoradiale à l'axe de rotation R130 de la roue avant, de façon que cette dernière puisse, indépendamment de son roulement autour de son axe de rotation, pivoter autour de l'axe de pivotement et ainsi modifier l'orientation de la roue par rapport au châssis 110 et donc la direction de progression pour le châssis 110 vis-à-vis du sol. Chacune des roues avant 130 peut ainsi être qualifiée de « roue pivotante », parfois appelée « roue folle ». En pratique, les spécificités du montage des roues avant 130 sur le châssis 110 ne sont pas limitatives de l'invention.

Dans tous les cas, chacune des roues avant 130 comporte un bandage 131, autrement appelé « bande de roulement », qui forme une garniture périphérique externe de la roue avant, en étant centré sur l'axe de rotation R130, et qui, lors du roulement de la roue avant 130 sur un sol dur, est au contact direct du sol. Comme plus particulièrement visible sur les figures 2 à 4, le bandage 131 de chaque roue avant 130 est supporté par une jante 132 de la roue. Cette jante 132 est centrée sur l'axe de rotation R130 et, dans l'exemple de réalisation considéré sur les figures, est solidarisée à un moyeu 133 de la roue avant, centré sur l'axe de rotation R130. Egalement dans l'exemple de réalisation considéré ici, chacune des roues avant 130 comporte deux enjoliveurs 134 qui, sur chacun des côtés latéraux de la roue avant, habille la région intermédiaire de la roue avant entre la jante 132 et le moyeu 133. En pratique, les spécificités de chacune des roues avant 130, relatives à la jante 132 et à la liaison de cette dernière au reste de la roue avant ne sont pas limitatives de l'invention.

Dans tous les cas, le bandage 131 de chaque roue avant 130 est prévu pour, d'une part, présenter une capacité de déformation élastique par compression et, d'autre part, déborder légèrement de la jante 132 sur chacun des côtés latéraux de la roue avant, en formant ainsi deux bourrelets 135. Comme bien visible sur les figures 3 et 4, chaque bourrelet 135 du bandage 131 de chaque roue avant 130 n'est pas en affleurement de la jante correspondante 132, mais est saillant vis-à-vis de cette jante vers l'extérieur de la roue. Bien entendu, chaque bourrelet 135 s'étend de manière continue sur toute la périphérie de la roue avant correspondante 130 et présente ainsi une forme globalement annulaire, centrée sur l'axe de rotation R130 de la roue avant. En pratique, la forme et la capacité de déformation élastique des bourrelets 135 de chaque bandage 131 résultent de la structure du bandage.

Dans la forme de réalisation considérée sur les figures, le bandage 131 de chaque roue avant 130 présente avantageusement une structure massive, qui, à la différence d'une structure pneumatique, n'est pas concernée par une opération de mise en pression d'air variable, de sorte que le profil du bandage 131 ne subit pas de déformation sensible dans des conditions normales d'utilisation de la poussette 100. La structure massive du bandage 131 est préférentiellement réalisée en une mousse de polyuréthane, qui est par exemple mise en forme en étant expansée à froid dans un moule fermé. Une telle mousse de polyuréthane a pour avantages de présenter une dureté shore constante sur tout le bandage 131, ainsi qu'une haute résistance à l'usure, ce qui assure au bandage 131 de conserver ses dimensions dans le temps et de préserver sa résilience aux basses températures. Bien entendu, en variante, le matériau constitutif de la structure massive, notamment moussée, du bandage 131 n'est pas limité à la mousse de polyuréthane, d'autres matériaux pouvant être envisagés, en particulier dès lors qu'ils présentent des performances qui sont semblables à celles de la mousse de polyuréthane.

Pour ce qui concerne les roues arrière 140, elles définissent chacune un axe de rotation autour duquel la roue correspondante tourne pour rouler sur un sol suffisamment dur et qui, en service, s'étend de manière sensiblement parallèle au sol. Chacune des roues arrière 140 est montée sur une partie arrière du châssis 110, en étant avantageusement reliée à la partie arrière du châssis de manière fixe, c'est-à-dire de manière non pivotante comparativement aux roues avant 130. Dans l'exemple de réalisation considéré sur les figures, les axes de rotation respectifs des roues arrière 140 sont alignés, de sorte que les roues arrière 140 forment un train de roues arrière fixes, centré sur un même axe de rotation. Notamment pour des raisons de résistance structurelle, ce train de roues arrière inclut avantageusement une barre d'essieu 141, qui est montrée en pointillés sur la figure 1 et qui s'étend coaxialement entre les roues arrière 140, depuis chacune de ces dernières.

La poussette comporte en outre un organe de poussée 150 qui est porté solidairement par la partie arrière du châssis 110, en région haute de cette partie arrière. L'organe de poussée 150 permet à l'utilisateur d'appliquer au châssis 110 une sollicitation manuelle visant notamment à pousser le châssis 110 vers l'avant, en particulier en faisant rouler le châssis sur un sol suffisamment dur par l'intermédiaire des roues 130 et 140. L'organe de poussée 150 est réalisé, par exemple, sous forme d'une barre, de poignées, etc. La forme de réalisation de l'organe de poussée 150 n'est pas limitative de l'invention.

On va maintenant s'intéresser davantage aux deux accessoires de glisse 200 et 300. Dans l'exemple de réalisation considéré sur les figures, ces deux accessoires de glisse sont identiques l'un à l'autre de sorte que, ci-dessous, seul l'accessoire de glisse 200 va être décrit en détail, étant entendu que l'accessoire de glisse 300 se décrit en des termes identiques.

La description de l'accessoire de glisse 200 est orientée par rapport à un repère orthogonal défini par des axes géométriques X-X, Y-Y et Z-Z, comme indiqué sur les figures. En pratique, lorsque l'accessoire de glisse 200 est utilisé pour faire glisser au moins partiellement la poussette 100 sur un sol enneigé qui est horizontal, les axes X-X et Y-Y, qui sont perpendiculaires l'un à l'autre, sont horizontaux tandis que l'axe Z-Z, qui est perpendiculaire aux axes X-X et Y-Y, est vertical.

Comme bien visible sur les figures 5 et 6, l'accessoire de glisse 200 comporte une semelle 210 ayant une forme allongée suivant l'axe X-X. Autrement dit, la semelle 210 s'étend en longueur selon l'axe X-X. La semelle 210 présente des côtés opposés l'un à l'autre suivant l'axe Z-Z, à savoir un côté inférieur, destiné à être tourné vers le sol, et un côté supérieur, destiné à être tourné vers le haut, c'est-à-dire en direction opposée au sol.

Fonctionnellement, la semelle 210 s'apparente à un patin de ski. A cet égard, la semelle 210 est pourvue, sur son côté inférieur, d'une face de glissement sur la neige 210A prévue pour être appliquée contre le sol enneigé. De plus, la semelle 210 est susceptible de présenter divers aménagements visant à faciliter sa glisse sur un sol enneigé, qui ne sont toutefois pas limitatifs de l'invention. A titre d'exemple, dans la forme de réalisation considérée sur les figures, la face de glissement 210A est avantageusement rainurée afin de faciliter l'évacuation du film d'eau qui se forme sous la semelle 210 pendant la glisse sur la neige : ici, la face de glissement 210A est ainsi pourvue de deux rainures 211 qui s'étendent selon l'axe X-X sur sensiblement toute l'étendue axiale de la semelle 210. Par ailleurs, la semelle 210 forme, au niveau de sa partie longitudinale terminale avant 212, une spatule qui, comparativement au reste de la semelle 210 s'élargit légèrement suivant l'axe Y-Y et se relève progressivement vers le haut jusqu'à son extrémité libre avant. De même, la semelle 210 inclut une partie longitudinale terminale arrière 213 qui forme un talon qui se relève progressivement vers le haut jusqu'à son extrémité libre arrière, le relèvement du talon étant moins marqué que celui de la spatule.

L'accessoire de glisse 200 comporte également une cellule 220 adaptée pour être solidarisée de manière amovible à une roue de poussette. La cellule 220 n'est ainsi solidarisable qu'à une seule roue de poussette, sans interférer avec aucune autre des roues de la poussette. Dans la forme de réalisation considérée sur les figures, la cellule 220 est ainsi adaptée pour être solidarisée à l'une ou l'autre des roues avant 130, comme expliqué plus en détail par la suite. Sur la figure 1, la cellule 220 permet ainsi de solidariser de manière amovible l'accessoire de glisse 200 à la roue avant 130 gauche tandis que l'accessoire de glisse 300 est solidarisé de manière amovible à la roue avant 130 droite.

La cellule 220 est portée par la semelle 210, en étant agencée sur le côté supérieur de la semelle 210. Dans la forme de réalisation considérée ici, la cellule 220 s'élève depuis une face 21 0B, dont la semelle est pourvue sur son côté supérieur et qui est globalement parallèle à la face de glissement 210A. Par ailleurs, la cellule 220 est avantageusement située dans une partie longitudinale intermédiaire 214 de la semelle 210, entre les parties longitudinales terminales avant 212 et arrière 213.

La cellule 220 définit un logement 221 prévu pour recevoir une portion basse de la roue 130. Afin que la portion basse de la roue 130 puisse être introduite à l'intérieur du logement 221 et, de manière réversible, en être retirée, le logement 221 est ouvert vers le haut, c'est-à-dire selon l'axe Z-Z et en direction opposée au côté inférieur de la semelle 210. De cette façon, l'accessoire de glisse 200 et la roue 130 sont déplaçables l'un par rapport à l'autre selon l'axe Z-Z de manière à passer l'accessoire de glisse 200 de manière réversible entre :
- une configuration opérationnelle, dans laquelle l'accessoire de glisse 200 est solidarisé à la roue 130, avec la portion basse de cette roue, qui est engagée au maximum vers le bas dans le logement 221, et
- une configuration inopérationelle, dans laquelle l'accessoire de glisse 200 est désolidarisé de la roue 130, avec la portion basse de la roue, qui est dégagée du logement 221, en étant davantage écartée, selon l'axe Z-Z et vers le haut, de la semelle 210 que dans la configuration opérationnelle.

La configuration opérationnelle est illustrée sur les figures 1 à 4 pour l'accessoire de glisse 200. La configuration inopérationnelle est illustrée sur la figure 2 pour l'accessoire de glisse 300.

Dans l'exemple de réalisation considéré sur les figures, le logement 221 présente avantageusement un plan de symétrie P, qui est parallèle aux axes X-X et Z-Z et qui est situé sensiblement au milieu de la semelle 210 suivant l'axe Y-Y. Ce plan de symétrie P correspond au plan de coupe VI indiqué sur la figure 5.

Suivant l'axe Z-Z, le logement 221 est fermé vers le bas, c'est-à-dire en direction de la semelle 210, par une paroi de fond 222 de la cellule 220, qui agencée transversalement à l'axe Z-Z. Autrement dit, la paroi de fond 222 s'étend en travers de l'axe Z-Z. La paroi de fond 222 est prévue de manière que :
- lorsque l'accessoire de glisse 200 est en configuration opérationnelle, le bandage 131 de la roue 130 est, au niveau de sa portion basse, appuyé contre la paroi de fond 222 suivant l'axe Z-Z, et
- lorsque l'accessoire de glisse 200 est en configuration inopérationnelle, le bandage 131 de la roue 130 est distant de la paroi de fond 222.

Dans la forme de réalisation considérée sur les figures, la paroi de fond 222 est formée d'une portion de tube, qui est centrée sur un axe géométrique Y222 parallèle à l'axe Y-Y et dont la concavité est tournée vers le haut, c'est-à-dire en direction opposée au côté inférieur de la semelle 210. La face concave de cette portion de tube présente un rayon qui est légèrement supérieur au diamètre de la roue 130, tout en étant pourvue d'au moins un renflement 222.1 réduisant localement l'écartement entre cette face concave et l'axe géométrique Y222. Lorsque l'accessoire de glisse 200 est en configuration opérationnelle, un jeu radial subsiste entre la face concave de la portion de tube précitée et le bandage 131 de la roue 130, excepté au niveau du ou de chaque renflement 222.1 contre lequel le bandage est en appui suivant l'axe Z-Z, comme bien visible sur la figure 4. La paroi de fond 222 est ainsi conçue pour globalement épouser la portion basse de la roue 130, ce qui rend la cellule 220 particulièrement intuitive à faire coopérer avec la roue 130 pour l'utilisateur et ce qui facilite le dégagement de neige qui pourrait encombrer le logement 221 avant la solidarisation de la cellule à la roue 130.

Egalement dans la forme de réalisation considérée sur les figures, le plan géométrique défini par la face de glissement 210A de la semelle 210 tangente la face convexe de la portion de tube formant la paroi de fond 222, comme bien visible sur les figures 3 et 4. En service, la paroi de fond 222 se retrouve ainsi localement en appui contre le sol enneigé sur lequel la face de glissement 210A est appliquée. La compacité et la robustesse de la cellule 220 sont ainsi renforcées.

Suivant l'axe Y-Y, le logement 221 est fermé par deux parois latérales 223 de la cellule 220, à savoir une paroi latérale gauche et une paroi latérale droite. Les deux parois latérales 223 sont agencées parallèlement aux axes X-X et Z-Z, en étant disposées en regard l'une de l'autre selon l'axe Y-Y et en étant reliées l'une à l'autre, suivant l'axe Y-Y, par la paroi de fond 222. Lorsque l'accessoire de glisse 200 est en configuration opérationnelle, la portion basse de la roue 130 est interposée, suivant l'axe Y-Y, entre les parois latérales 223, comme bien visible sur les figures 1 à 3.

Dans la forme de réalisation considérée sur les figures, chacune des parois latérales 223 se prolonge, suivant l'axe Z-Z, jusqu'à la semelle 210. Chaque paroi latérale 223 s'étend ainsi en saillie depuis la face 210B de la semelle 210.

Chacune des deux parois latérales 223 est pourvue d'un relief 224 qui s'étend en saillie selon l'axe Y-Y depuis le reste de la paroi latérale correspondante vers l'autre paroi latérale. Les deux reliefs 224 de l'accessoire de glisse 200 sont conjointement adaptés pour coopérer par contact avec le bandage 131 de la roue 130 lorsque l'accessoire de glisse 200 est dans la configuration opérationnelle et lorsque cet accessoire de glisse passe entre cette configuration opérationnelle et la configuration inopérationnelle. Cette coopération par contact entre les reliefs 224 et le bandage 131 résulte d'une interférence dimensionnelle entre les reliefs 224 et le bandage 131, en particulier les bourrelets 135 de ce dernier.

Ainsi, lorsque l'accessoire de glisse 200 est dans la configuration opérationnelle, les reliefs 224 appuient le bandage 131, plus précisément la portion basse de ce dernier, contre la paroi de fond 222 du logement 221 selon l'axe Z-Z aux fins de la solidarisation de l'accessoire de glisse à la roue 130, comme bien visible sur les figures 3 et 4. En pratique, les reliefs 224 appuient notamment ainsi respectivement sur les bourrelets 135 du bandage 131, plus précisément sur des portions basses respectives de ces bourrelets 135, du fait de l'interférence dimensionnelle précitée entre les reliefs 224 et les bourrelets 135. En particulier, la largeur du bandage 131 au niveau des bourrelets 135 alors que le bandage 135 est au repos, c'est-à-dire non soumis à des contraintes d'écrasement, est prévue, d'une part, inférieure ou égale à l'écartement, selon l'axe Y-Y, entre les parois latérales 223 en dehors de reliefs 224 et, d'autre part, supérieure à l'écartement, selon l'axe Y-Y, entre les reliefs 224.

Lorsque l'accessoire de glisse passe entre les configurations opérationnelle et inopérationnelle, le bandage 131, plus précisément la portion basse de ce dernier, est comprimée élastiquement par les reliefs 224. Cette compression du bandage 131 par les reliefs 224 est opérée essentiellement au niveau des bourrelets 135 du bandage 131, du fait de l'interférence dimensionnelle précitée entre les reliefs 224 et les bourrelets 135. Dans le même temps, la jante 132 ne contraint pas substantiellement les reliefs 224, dans le sens où l'écartement, suivant l'axe Y-Y, entre les reliefs 224 est égal ou supérieur à la largeur de la jante 132.

Suivant un aménagement optionnel qui facilite le passage de l'accessoire de glisse 200 entre ses configurations opérationnelle et inopérationnelle, le relief 224 de chaque paroi latérale 223 est biseauté de manière à comprimer progressivement le bandage 131, en particulier les bourrelets 135 de ce dernier, vers l'autre paroi latérale lorsque l'accessoire de glisse 200 passe d'une de ses configurations opérationnelle et inopérationnelle vers l'autre configuration. Comme bien visible sur les figures 3, 5 et 6, chaque relief 224 présente ainsi, d'une part, une surface supérieure 224A, qui s'étend depuis la paroi latérale correspondante 223 de manière inclinée vers le bas et, d'autre part, une surface inférieure 224B, qui s'étend depuis la paroi latérale correspondante 223 de manière inclinée vers le haut. Ainsi, en coupe transversale à l'axe Y-Y, comme sur la figure 3, chaque relief 224 présente un profil en « V », le cas échéant tronqué au niveau de la pointe du « V ».

Egalement suivant une disposition optionnelle avantageuse, qui est mise en oeuvre dans l'exemple de réalisation considéré ici, chaque relief 224 présente, en projection selon l'axe Y-Y sur la paroi latérale correspondante 223, une forme arquée qui, comme bien visible sur la figure 6, est bombée vers le bas, autrement dit vers la paroi de fond 222 du logement 221. Cette forme arquée améliore la coopération par contact entre les reliefs 224 et le bandage 131 de la roue 130. En particulier, comme bien visible sur la figure 6, chaque relief 224 présente un profil inférieur, en particulier au niveau de sa surface inférieure 224B, qui est conformé en un arc de cercle dont le rayon est sensiblement égal à celui du bandage 131, en particulier des bourrelets 135 de ce dernier. De cette façon, lorsque l'accessoire de glisse 200 est dans la configuration opérationnelle, ce profil inférieur de chaque relief 224 épouse la courbure du bandage 131 de la roue 130, en particulier la courbure des bourrelets 135. Le relief 224 présente par ailleurs un profil supérieur, notamment au niveau de sa surface supérieure 224A, qui est également arqué mais dont la courbure est plus faible que celle du profil supérieur. Lorsque l'accessoire de glisse 200 passe de la configuration inopérationnelle à la configuration opérationnelle, ce profil supérieur du relief 224 facilite l'engagement de la portion basse de la roue 130 à l'intérieur du logement 221, en guidant le centrage progressif de la roue 130 vis-à-vis du profil inférieur du relief 224.

Suivant l'axe X-X, chacun des reliefs 224 ne s'étend pas de manière continue dans l'exemple de réalisation considéré sur les figures, mais, au contraire, est constitué de plusieurs éléments distincts 224.1, 224.2 et 224.3 qui, comme bien visible sur les figures 5 et 6, sont séparés les uns des autres suivant l'axe X-X. Cette forme de réalisation segmentaire des reliefs 224 présente des intérêts pratiques pour la fabrication de la cellule 220. Cette forme de réalisation segmentaire permet également de faire interagir les reliefs 224 et le bandage 131 de la roue 130 sur une grande étendue suivant l'axe X-X, sans que cette coopération ne soit continue suivant la direction périphérique du bandage 13. On évite ainsi des surcontraintes localisées puisque le bandage 131 n'est pas significativement contraint par les reliefs 224 au niveau des espaces libres entre les éléments 224.1, 224.2 et 224.3.

Suivant l'axe X-X, le logement 221 est avantageusement fermé par une paroi avant 225 et une paroi arrière 226, qui sont disposées en regard l'une de l'autre selon l'axe X.X. Comme bien visible sur la figure 5, chacune de ces parois avant 225 et arrière 226 relie les parois latérales 223 l'une à l'autre, ce qui renforce la résistance structurelle de la cellule 220 et de son logement 221. Lorsque l'accessoire de glisse 200 est dans la configuration opérationnelle, la paroi avant 225 forme une butée, selon l'axe X-X et vers l'avant, pour la portion basse de la roue 130, comme bien visible sur la figure 4. De même, la paroi arrière 226 forme une butée, selon l'axe X-X et vers l'arrière, pour la portion basse de la roue 130. Les parois avant 225 et arrière 226 renforcent ainsi la solidarisation de la roue 130 à la cellule 220 lorsque l'accessoire de glisse 200 est dans la configuration opérationnelle. Les butées respectivement formées par les parois avant 225 et arrière 226 coopèrent par contact avec la portion basse de la roue 130, plus précisément le bandage 131 de cette portion basse, en raison de leur interférence dimensionnelle. A cet égard, comme bien visible sur la figure 4, les parois avant 225 et arrière 226 sont, au niveau du débouché du logement 221, distantes l'une de l'autre suivant l'axe X-X avec un écartement inférieur au diamètre externe du bandage 131.

Dans la forme de réalisation considérée sur les figures, chacune des parois avant 225 et arrière 226 se prolonge, suivant l'axe Z-Z, jusqu'à la semelle 210. La paroi avant 225 et la paroi arrière 226 s'étendent ainsi chacune en saillie depuis la face 210B de la semelle 210. De plus, dans l'exemple de réalisation considéré sur les figures, les parois avant 225 et arrière 226 s'élèvent ainsi de manière inclinée par rapport à l'axe Z-Z. L'inclinaison de la paroi arrière 226 par rapport à l'axe Z-Z est d'ailleurs plus marquée que celle de la paroi avant 225, en valant notamment au moins 30°, de manière que la paroi arrière 226 présente, sur son côté tourné vers le haut, c'est-à-dire tourné en direction opposée au côté inférieur de la semelle 210, une face 226A qui présente une étendue substantielle selon l'axe X-X et qui est pourvue d'une ou de plusieurs saillies 227 réparties selon l'axe X-X. L'intérêt de cette ou ces saillies 227 apparaitra plus loin.

Dans tous les cas, le logement 221 permet de solidariser et de désolidariser l'accessoire de glisse 200 à la roue 130 de manière simple, efficace, pratique et instantanée.

En effet, en considérant par exemple que la poussette 100 est d'abord utilisée pour rouler, par ses roues avant 130 et arrière 140, sur un sol dur puis que la poussette 100 atteint un sol enneigé sur lequel il serait difficile de progresser du fait de l'enfoncement des roues dans la neige, l'utilisateur de la poussette 100 peut instantanément rapporter les accessoires de glisse 200 et 300 à la poussette 100, en les fixant respectivement aux roues avant 130. Pour ce faire, l'utilisateur soulève la partie avant du châssis 110 de manière à décoller les roues avant 130 de quelques centimètres par rapport au sol. Cette manoeuvre de soulèvement de la partie avant de la poussette 100 peut être mise en oeuvre facilement en maintenant appuyée au sol la partie arrière de la poussette 100, au niveau de ses roues arrière 140, et ce, le cas échéant, alors qu'un enfant reste présent dans l'organe de réception 120 de la poussette. L'utilisateur place ensuite l'accessoire de glisse 200 sous la roue avant 130 gauche, en positionnant cette dernière à l'aplomb vertical du logement 221. L'utilisateur peut alors cesser le soulèvement de la partie avant du châssis 110, en venant faire reposer la roue avant gauche 130 dans la partie haute du logement 221, en particulier contre les surfaces supérieures respectives 224A des reliefs 224. L'utilisateur applique ensuite une poussée franche sur la partie avant du châssis 210 en direction du sol, autrement dit selon l'axe Z-Z et vers le bas : la portion basse du bandage 131 de la roue avant gauche 130 est entraînée vers le bas, en étant, en particulier au niveau de ses bourrelets 135, comprimée élastiquement selon l'axe Y-Y par les reliefs 224, et ce jusqu'à franchir ces reliefs 224 vers le bas. Une fois que les reliefs 224 sont ainsi franchis par le bandage 131, ce dernier, en particulier ses bourrelets 135, se décomprime au moins partiellement, par effet élastique, tout en se retrouvant appuyé contre la paroi de fond 222 suivant l'axe Z-Z par les reliefs 224. Dans le même temps, le bandage 131 se retrouve mis en butée, suivant l'axe X-X, contre les parois avant 225 et arrière 226. La portion basse du bandage 131 se retrouve ainsi intimement calée en partie basse du logement 221, ce qui assure la solidarisation de l'accessoire de glisse 200 à la roue 130. L'utilisateur procède aux mêmes manipulations avec l'accessoire de glisse 300 pour solidariser ce dernier à la roue avant 130 droite, la figure 2 illustrant d'ailleurs la situation dans laquelle l'accessoire de glisse 200 est déjà solidarisé à la poussette 100 tandis que l'utilisateur soulève la partie avant du châssis 110 et positionne l'accessoire de glisse 300 à l'aplomb de la roue avant 130 droite en vue de la solidarisation de cette dernière avec l'accessoire de glisse 300.

Une fois que les deux accessoires de glisse 200 et 300 sont solidarisés à la poussette 100, comme sur la figure 1, l'utilisateur peut faire avancer la poussette 100 sur le sol enneigé, moyennant le glissement des accessoires de glisse 200 et 300 sur la neige au niveau de la partie avant de la poussette. On notera que la poussette 100 reste manoeuvrable en virage du fait de la capacité de pivotement des roues avant 130 par rapport au châssis 110.

En considérant maintenant que l'utilisateur souhaite dégager les accessoires de glisse 200 et 300 vis-à-vis de la poussette 100 car, par exemple, l'utilisateur atteint une zone de sol non enneigée, l'utilisateur se place latéralement à la poussette 100 et pose l'avant de ses pieds au moins sur la face 210B de la semelle 210, de part et d'autre de la cellule 220 de l'accessoire de glisse 200, de manière à maintenir fermement la semelle contre le sol. L'inclinaison et les saillies 227 de la paroi arrière 226 servent avantageusement à renforcer ce maintien, en permettant à l'un des pieds de l'utilisateur d'être partiellement posé sur la face 226A de la paroi arrière 226 et d'être retenu fermement vis-à-vis de cette dernière par frottement/coincement contre les saillies 227. L'utilisateur tire alors la partie avant du châssis 110 verticalement vers lui, c'est-à-dire selon l'axe Z-Z et vers le haut, ce qui entraîne de manière correspondante la roue avant 130 gauche hors du logement 221, moyennant la compression élastique du bandage 131, en particulier des bourrelets 135 de ce dernier, pour franchir vers le haut les reliefs 224. L'accessoire de glisse 200 passe alors dans la configuration inopérationnelle. L'utilisateur agit à l'identique avec l'accessoire de glisse 300 pour désolidariser ce dernier de la roue avant 130 droite.

On notera que ce qui vient d'être décrit au sujet de la solidarisation/désolidarisation des accessoires de glisse 200 et 300 aux roues avant 130 de la poussette est, en principe, directement applicable pour les roues arrière 140 sous réserve que ces dernières incluent chacune un bandage similaire au bandage 131 des roues avant 130. En particulier, sous réserve de disposer de l'accessoires de glisse en quatre exemplaires, il est théoriquement possible d'équiper chacune des quatre roues de la poussette 100 avec l'un des accessoires de glisse. Toutefois, en pratique, l'usage conjoint d'accessoires de glisse, tels que les accessoires de glisse 200 et 300, sur toutes les roues de la poussette peut ne pas être recommandé, voire déconseillé ou même interdit pour des raisons de sécurité : en effet, il peut y avoir un danger potentiel important sur un sol enneigé en pente, en particulier si l'utilisateur lâchait la poussette par inadvertance ou maladresse. A cet égard, selon un aménagement optionnel avantageux des accessoires de glisse 200 et 300, chacun de ces derniers est pourvu d'un avertissement correspondant à destination de l'utilisateur, cet avertissement étant tourné vers le haut, c'est-à-dire en direction opposée au côté inférieur de leur semelle, de manière à être visible en service par l'utilisateur. Ainsi, dans l'exemple de réalisation considéré sur les figures, l'accessoire de glisse 200 est pourvu, sur la face 210B de sa semelle 210, d'une zone d'avertissement visuel 215. Cette zone d'avertissement visuel 215 inclut par exemple un ou plusieurs pictogrammes et/ou du texte, destinés à faire comprendre à l'utilisateur que l'accessoire de glisse n'est à prévoir que pour les roues avant 130. La forme de réalisation de la zone d'avertissement visuel 215 n'est pas limitative et consiste par exemple en un autocollant, un marquage incrusté, etc.

Au-delà des performances fonctionnelles qui ont été détaillées jusqu'ici pour les accessoires de glisse 200 et 300, ces derniers sont avantageusement conçus pour pouvoir être fabriqués de manière simple et économique. Pour ce faire, la paroi de fond 222, les deux parois latérales 223 et les parois avant 225 et arrière 226 sont venues de matière avec la semelle 210, comme dans l'exemple de réalisation considéré sur les figures. En particulier, la paroi de fond 222, les parois latérales 223 et les parois avant 225 et arrière 226 sont préférentiellement moulées d'une seule pièce avec la semelle 210. Autrement dit, la cellule 220 et la semelle 210 sont préférentiellement intégrées l'une à l'autre, notamment par moulage. Pour faciliter le démoulage, la semelle 210 est avantageusement pourvue d'ouvertures traversantes 216 qui, comme bien visible sur les figures 3 et 5, relient l'un à l'autre les côté inférieur et supérieur de la semelle 210 : ces ouvertures traversantes 216 sont disposées à l'aplomb, suivant l'axe Z-Z, des reliefs 224.

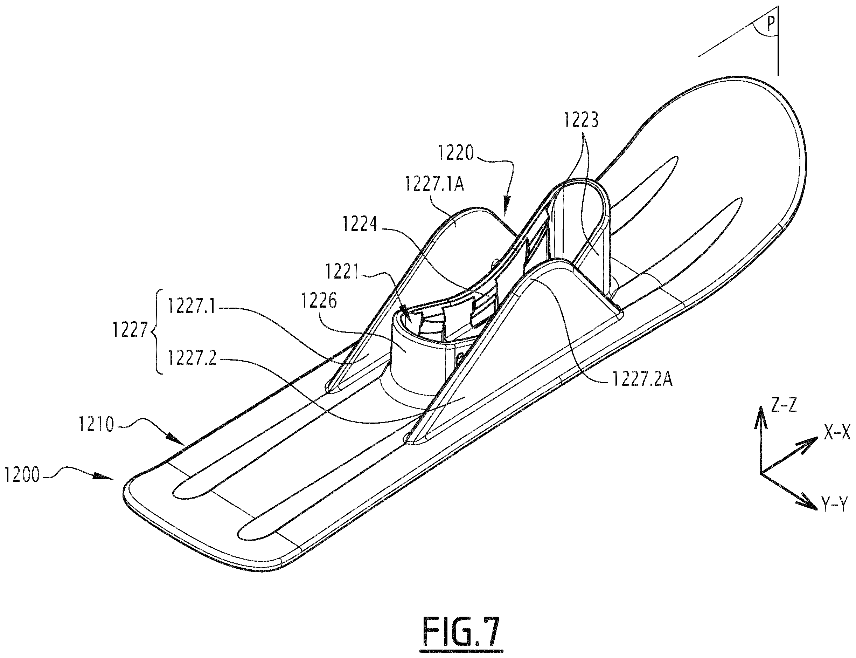

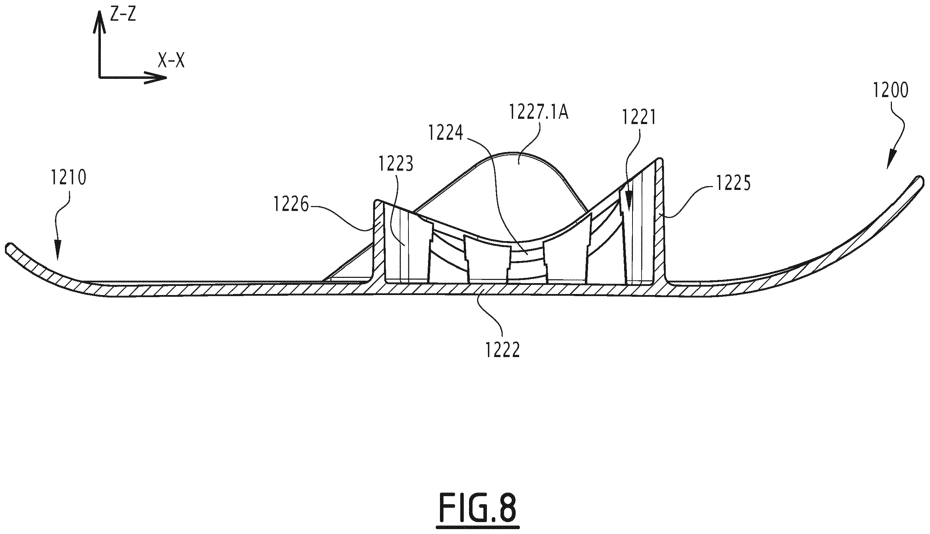

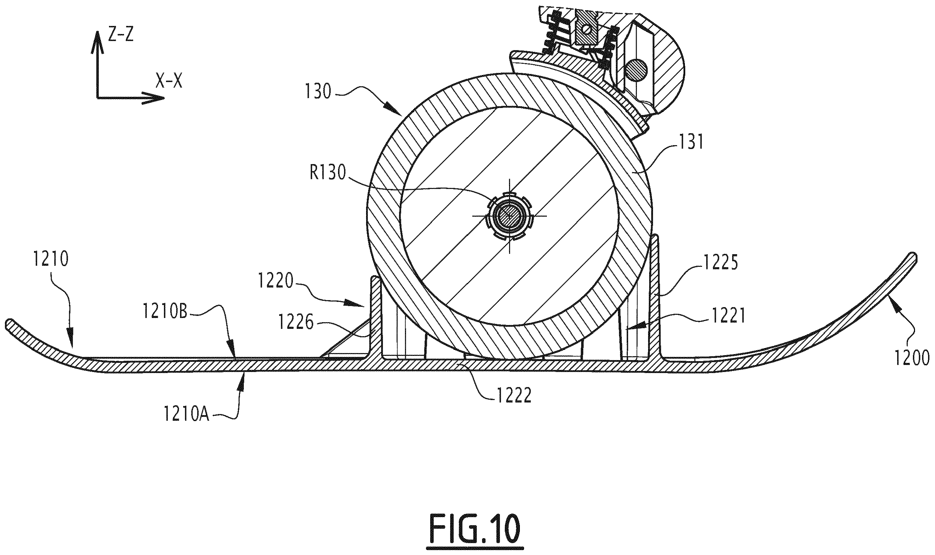

Les figures 7 à 11 montrent des accessoires de glisse 1200 et 1300 en tant que mode de réalisation alternatif aux accessoires de glisse 200 et 300 décrits jusqu'ici. Les accessoires de glisse 1200 et 1300 sont fonctionnellement similaires aux accessoires de glisse 200 et 300, dans le sens où, comme les accessoires de glisse 200 et 300, ils permettent de faire glisser l'avant de la poussette 100 sur un sol enneigé. Ceci étant, les accessoires de glisse 1200 et 1300 présentent des spécificités comparativement aux accessoires de glisse 200 et 300, qui sont détaillées ci-après.

Dans l'exemple de réalisation considéré sur les figures, les deux accessoires de glisse 1200 et 1300 sont identiques l'un à l'autre de sorte que, ci-dessous, seul l'accessoire de glisse 1200 va être décrit en détail, étant entendu que l'accessoire de glisse 1300 se décrit en des termes identiques.

L'accessoire de glisse 1200 comporte une semelle 1210 qui est similaire fonctionnellement, voire structurellement à la semelle 210. En particulier, la semelle 1210 est pourvue, sur son côté inférieur, d'une surface de glissement sur la neige 1210A et est pourvue, sur son côté supérieur, d'une face 1210B.

L'accessoire de glisse 1200 comporte également une cellule 1220 qui est similaire fonctionnellement à la cellule 220. En particulier, la cellule 1220 définit un logement 1221, qui est fonctionnellement similaire au logement 221 et qui est délimité par une paroi de fond 1222, des parois latérales 1223, une paroi avant 1125 et une paroi arrière 1226, qui sont respectivement similaires fonctionnellement aux parois 222, 223, 225 et 226. Comme la cellule 220, la cellule 1220 est avantageusement venue de matière, notamment venue de moulage, avec la semelle 1210.

A la différence de la paroi de fond 222, la paroi de fond 1222 est sensiblement plane, en étant formée par la semelle 1210, plus précisément par une partie dédiée de la semelle, située à l'aplomb, suivant l'axe Z-Z, de la cellule 1220. Cette disposition présente des intérêts pour la compacité, la robustesse et la fabrication, notamment le moulage, de l'accessoire de glisse 1200.

Les parois latérales 1223 sont essentiellement identiques aux parois latérales 223, notamment en étant pourvues de reliefs 1224 qui sont similaires aux reliefs 224.

A la différence des parois avant 225 et arrière 226, les parois avant 1225 et arrière 1226 ne sont pas inclinées par rapport à l'axe Z-Z, mais s'élèvent parallèlement à cet axe Z-Z depuis la semelle 1210. La paroi arrière 1226 est dès lors dépourvue de saillies telles que les saillies 227.

Indépendamment des spécifiés structurelles relatives aux parois 1222, 1223, 1225 et 1226 de la cellule 1220, cette dernière présente un aménagement optionnel permettant d'empêcher l'accessoire de glisse 1200 d'être solidarisé aux roues arrière 140 de la poussette 100. Cet aménagement est d'ailleurs compatible avec la fabrication des accessoires de glisse 1200 et 1300 par moulage.

A cet effet, la cellule 1220 comporte un détrompeur 1227 qui, par interférence suivant l'axe Z-Z avec la barre d'essieu 141, empêche de passer l'accessoire de glisse 1200 de la configuration inopérationnelle à la configuration opérationnelle lorsque l'utilisateur tente de solidariser l'accessoire de glisse 1200 à l'une ou l'autre des roues arrière 140. Dans la forme de réalisation considérée sur les figures, ce détrompeur 1227 inclut deux voiles 1227.1 et 1227.2 qui sont agencés de manière sensiblement parallèle aux axes X-X et Z-Z, en étant disposés de part et d'autre des parois latérales 1223. En pratique, les voiles 1227.1 et 1227.2 s'étendent depuis la face 1210B de la semelle 1210. Chacun de ces voiles 1227.1 et 1227.2 présente, à l'opposé de la semelle 1210 selon l'axe Z-Z, une extrémité 1227.1A, 1227.2A qui est prévue, notamment de par son dimensionnement, pour buter selon l'axe Z-Z contre la barre d'essieu 141 lorsque l'utilisateur tente de solidariser l'accessoire de glisse 1200 à l'une ou l'autre des roues arrière 140. Quelle que soit la forme de réalisation du détrompeur 1227, ce dernier interdit toute possibilité de solidarisation des accessoires de glisse 1200 et 1300 aux roues arrières 140, afin de ne pas risquer que toutes les roues 130 et 140 de la poussette 100 se retrouvent équipées d'un accessoire de glisse.

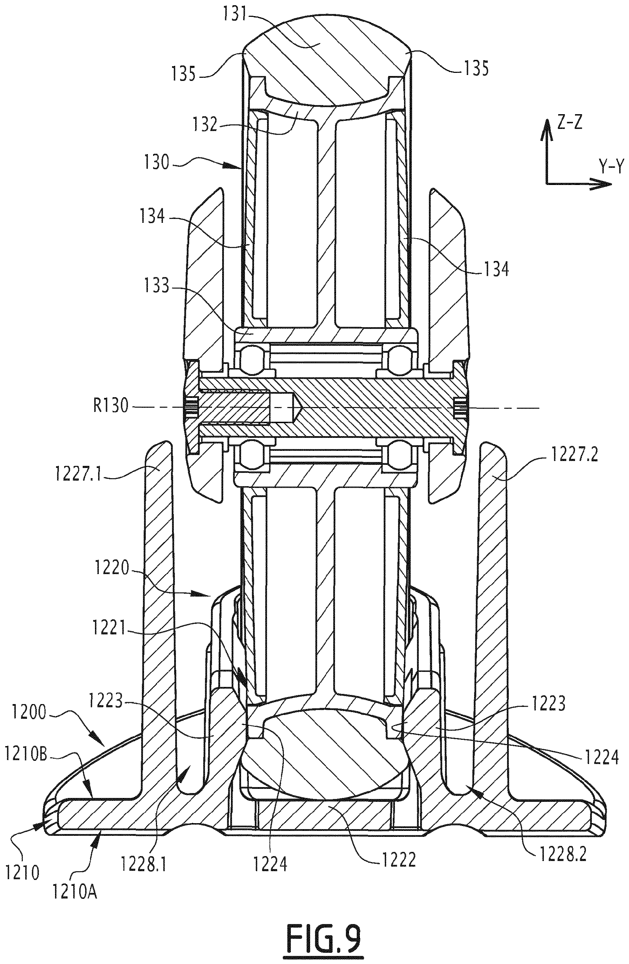

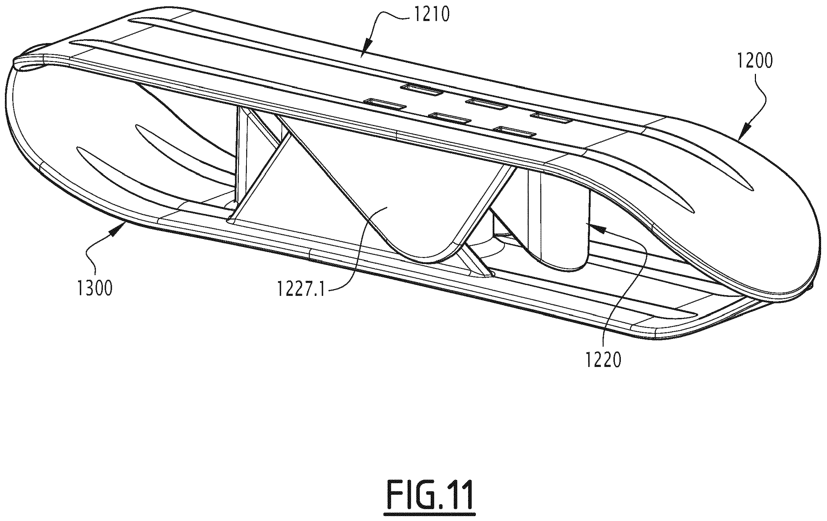

Suivant une disposition optionnelle avantageuse, qui met à profit la présence des voiles 1227.1 et 1227.2 du détrompeur 1227, les accessoires de glisse 1200 et 1300 peuvent être conjointement agencés tête bêche et retenus l'un à l'autre par emboîtement. Pour ce faire, chaque paroi latérale 1223 et le voile 1227.1, 1227.2 le plus proche de cette paroi latérale forment entre eux, suivant l'axe Y-Y, un espace libre 1228.1, 1228.2, comme bien visible sur les figures 7 et 9. Chacun de ces espaces libres 1228.1 et 1228.2 est conçu, notamment de par son dimensionnement, pour y emboîter l'un des voiles de l'accessoire de glisse 1300 lorsque cet accessoire de glisse 1300 en configuration inopérationnelle est rapporté tête bêche sur l'accessoire de glisse 1200, lui aussi en configuration inopérationelle. Les accessoires de glisse 1200 et 1300 se retrouvent alors agencés comme sur la figure 11. Chacun des espaces libres 1228.1 et 1228.2 est notamment prévu avec une largeur, c'est-à-dire une dimension suivant l'axe Y-Y, autrement dit avec un écartement suivant cet axe Y-Y entre la paroi latérale 1223 correspondante et le voile 1227.1, 1227.2 correspondant, qui est sensiblement égale à l'épaisseur, suivant l'axe Y-Y, des voiles 1227.1 et 1227.2. Lorsque les accessoires de glisse 1200 et 1300 sont dans l'état tête bêche de la figure 11, l'un des voiles 1227.1 et 1227.2 se retrouve calé dans l'un des espaces libres de l'accessoire de glisse 1300, ce qui tend à stabiliser l'agencement tête bêche. Dans tous les cas, lorsque les accessoires de glisse 1200 et 1300 sont rapportés l'un à l'autre tête bêche, ils forment conjointement un ensemble compact, dont l'enveloppe externe est globalement parallélépipédique et de faible encombrement, particulièrement aisée à manipuler. Par exemple, les accessoires de glisse 1200 et 1300 ainsi rapportés tête bêche sont facilement manipulables conjointement pour les déposer puis les récupérer dans un panier arrière de la poussette 100.

Enfin, divers aménagements et variantes à la poussette 100 et aux accessoires de glisse 200, 300, 1200 et 1300 décrits jusqu'ici sont envisageables. A titre d'exemples :
- plutôt que d'avoir deux roues avant, la poussette peut ne comporter qu'une seule roue avant ; de même, davantage que deux roues avant et davantage que deux roues arrière peuvent être prévues pour la poussette 100 ;
- plutôt que de présenter une structure massive, le bandage 131 peut être pneumatique, c'est-à-dire intégrer une chambre à air, mise sous pression ;
- plutôt que d'être réalisée d'une seule pièce avec la semelle 210 ou 1210, la cellule 220 ou 1220 peut être, en tant que pièce distincte, portée par la semelle en étant rapportée et solidarisée fixement à cette semelle; et/ou
- pour les accessoires de glisse 200 et 300, qui sont dépourvus d'un système de détrompage, tel que le détrompeur 227, il peut être prévu de pallier le danger mentionné plus haut, en intégrant un dispositif de frein à chacun des accessoires de glisse prévus pour les roues arrière 140, ce dispositif de frein étant conçu pour être actionné volontairement par l'utilisateur de la poussette 100, notamment au moyen d'une commande par le pied, et pour agir en bloquant le glissement de l'accessoire de glisse sur un sol enneigé.

## Revendications

1. Accessoire de glisse (200 ; 300 ; 1200 ; 1300) pour une poussette (100), comportant :
- une semelle (210 ; 1210), ayant une forme allongée suivant un premier axe (X-X) et présentant des premier et second côtés qui sont opposés l'un à l'autre selon un deuxième axe (Z-Z) perpendiculaire au premier axe, la semelle étant pourvue, sur son premier côté, d'une face de glissement sur la neige (210A ; 1210A) qui est destinée à être appliquée contre un sol enneigé, et
- une cellule (220 ; 1220), qui est portée par la semelle (210 ; 1210), en étant agencée sur le second côté de la semelle, et qui est adaptée pour être solidarisée de manière amovible à une roue (130) de la poussette (100),
dans lequel la cellule (220 ; 1220) définit un logement (221 ; 1221) de réception d'une portion basse de la roue (130), lequel logement est ouvert, selon le deuxième axe (Z-Z), en direction opposée au premier côté de la semelle (210 ; 1210) et lequel logement est délimité fixement par une paroi de fond (222 ; 1222), qui est agencée transversalement au deuxième axe (Z-Z), et par deux parois latérales (223 ; 1223) qui sont agencées de manière sensiblement parallèle au premier axe (X-X) et au deuxième axe (Z-Z), en étant disposées en regard l'une de l'autre selon un troisième axe (Y-Y) qui est perpendiculaire aux premier et deuxième axes,
dans lequel chacune des deux parois latérales (223 ; 1223) est pourvue d'un relief (224 ; 1224) qui s'étend en saillie du reste de la paroi latérale correspondante vers l'autre paroi latérale selon le troisième axe (Y-Y), et
dans lequel lesdits reliefs (224 ; 1224) sont conjointement agencés pour coopérer par contact avec un bandage (131) de la roue (130) de manière à, par déplacement relatif entre l'accessoire de glisse et la roue selon le deuxième axe (Z-Z), passer l'accessoire de glisse de manière réversible entre :
- une configuration opérationnelle, dans laquelle les reliefs (224 ; 1224) appuient le bandage (131) contre la paroi de fond (222 ; 1222) selon le deuxième axe (Z-Z) de manière à caler une portion basse du bandage en partie basse du logement (221 ; 1221) pour solidariser l'accessoire de glisse à la roue, et
- une configuration inopérationelle, dans laquelle l'accessoire de glisse est désolidarisé de la roue, le bandage étant comprimé élastiquement par les reliefs selon le troisième axe (Y-Y) lors du passage de l'accessoire de glisse entre les configurations opérationnelle et inopérationnelle.

2. Accessoire de glisse suivant la revendication 1, dans lequel le relief (224 ; 1224) de chaque paroi latérale (223 ; 1223) est biseauté de manière à comprimer progressivement le bandage (131) de la roue (130) vers l'autre paroi latérale lorsque l'accessoire de glisse (200 ; 300 ; 1200 ; 1300) est passé de l'une de ses configurations opérationnelle et inopérationnelle vers l'autre configuration.

3. Accessoire de glisse suivant la revendication 2, dans lequel chaque relief (224 ; 1224) présente, en coupe transversale au troisième axe (Y-Y), un profil en « V » ou bien un profil en « V » tronqué au niveau de la pointe du « V ».

4. Accessoire de glisse suivant l'une des revendications précédentes, dans lequel chaque relief (224 ; 1224) présente, en projection selon le troisième axe (Y-Y) sur la paroi latérale correspondante (223 ; 1223), une forme arquée qui est bombée vers la paroi de fond (222 ; 1222).

5. Accessoire de glisse suivant la revendication 4, dans lequel chaque relief (224 ; 1224) présente, sur son côté tourné vers la paroi de fond (222 ; 1222), un profil qui épouse la courbure du bandage (131) lorsque l'accessoire de glisse (200 ; 300 ; 1200 ; 1300) est en configuration opérationnelle.

6. Accessoire de glisse suivant l'une quelconque des revendications précédentes, dans lequel chaque relief (224 ; 1224) est constitué de plusieurs éléments (224.1, 224.2, 224.3) qui sont séparés les uns des autres suivant le premier axe (X-X).

7. Accessoire de glisse suivant l'une quelconque des revendications précédentes,
dans lequel le logement (221 ; 1221) est également délimité fixement par une paroi avant (225 ; 1225) et une paroi arrière (226 ; 1226), qui sont disposées au regard l'une de l'autre selon le premier axe (X-X) et qui relient chacune les deux parois latérales (223 ; 1223) l'une à l'autre, et
dans lequel les parois avant (225 ; 1225) et arrière (226 ; 1226) sont adaptées, lorsque l'accessoire de glisse (200 ; 300 ; 1200 ; 1300) est en configuration opérationnelle, pour former des butées respectives, selon le premier axe (X-X), pour la portion basse de la roue (130) en coopérant par contact avec le bandage (131) de la portion basse de la roue.

8. Accessoire de glisse suivant l'une quelconque des revendications précédentes, dans lequel la semelle (210 ; 1210) et la cellule (220 ; 1220) sont venues de matière, notamment venues de moulage, l'une avec l'autre.

9. Accessoire de glisse suivant la revendication 8, dans lequel la semelle (210 ; 1210) est pourvue d'ouvertures traversantes (216), qui relient l'une à l'autre les premier et second côtés de la semelle et qui sont disposées à l'aplomb, suivant le deuxième axe (Z-Z), des reliefs (224 ; 1224) aux fins d'un démoulage de l'accessoire de glisse (200 ; 300 ; 1200 ; 1300).

10. Accessoire de glisse suivant l'une quelconque des revendications précédentes, dans lequel la paroi de fond (222) est formée d'une portion de tube, qui est centrée sur un axe géométrique (Y222) parallèle au troisième axe (Y-Y) et dont la concavité est dirigée en direction opposée au premier côté de la semelle (210).

11. Accessoire de glisse suivant l'une quelconque des revendications 1 à 9, dans lequel la paroi de fond (1222) est sensiblement plane, en étant formée par la semelle (1210).

12. Ensemble de transport (1), comportant :
- une poussette (100) comprenant au moins une roue avant (130) et deux roues arrière (140), chaque roue avant ayant un bandage (131) qui est élastiquement déformable par compression, et
- pour chaque roue avant, un accessoire de glisse (200 ; 300 ; 1200 ; 1300), qui est conforme à l'une quelconque des revendications précédentes et qui, en configuration opérationnelle, est solidarisé à la roue avant correspondante.

13. Ensemble de transport suivant la revendication 12,
dans lequel le bandage (131) de chaque roue avant (130) est supporté par une jante (132) de la roue avant et déborde de cette jante sur chacun des côtés latéraux de la roue avant, en formant ainsi deux bourrelets (135),
dans lequel la largeur du bandage (131) de chaque roue avant (130) au niveau des bourrelets (135) alors que le bandage est au repos est, d'une part, inférieure ou égale à l'écartement, selon le troisième axe (Y-Y), entre les parois latérales (223 ; 1223) en dehors des reliefs (224 ; 1224) et, d'autre part, supérieure à l'écartement, selon le troisième axe, entre les reliefs,
et dans lequel l'écartement, suivant le troisième axe (Y-Y), entre les reliefs (224 ; 1224) est égal ou supérieur à la largeur de la jante (132) de chaque roue avant (130).

14. Ensemble de transport suivant l'une des revendications 12 ou 13,
dans lequel chaque roue avant (130) est montée sur une partie avant d'un châssis (110) de la poussette (100) , en étant reliée à cette partie avant du châssis de manière librement pivotante autour d'un axe de pivotement qui s'étend de manière radiale ou orthoradiale à l'axe de rotation (R130) de la roue avant,
et dans lequel, lorsque la ou chaque roue avant (130) et l'accessoire de glisse associé (200 ; 300 ; 1200 ; 1300) en configuration opérationnelle sont solidarisés l'un à l'autre, la poussette (100) reste manoeuvrable en virage par pivotement de la ou des roues avant par rapport au châssis (110).

15. Ensemble de transport suivant l'une quelconque des revendications 12 à 14,
dans lequel l'accessoire de glisse est conforme à la revendication 7,
et dans lequel les parois avant (225 ; 1225) et arrière (226 ; 1226) sont, au niveau du débouché du logement (221 ; 1221), distantes l'une de l'autre suivant le premier axe (X-X) avec un écartement inférieur au diamètre externe du bandage (131).

## Patentansprüche

1. Schiebezubehör (200; 300; 1200; 1300) für einen Kinderwagen (100), umfassend:
- eine Sohle (210; 1210), die eine längliche Form entlang einer ersten Achse (X-X) aufweist und eine erste und eine zweite Seite aufweist, die einander entlang einer zweiten Achse (Z-Z) senkrecht zu der ersten Achse gegenüberliegen, wobei die Sohle auf ihrer ersten Seite mit einer Gleitfläche auf Schnee (210A; 1210A) versehen ist, die dazu bestimmt ist, auf einen schneebedeckten Boden angewandt zu werden, und
- eine Zelle (220; 1220), die von der Sohle (210; 1210) getragen wird, indem sie auf der zweiten Seite der Sohle angeordnet ist, und die angepasst ist, um lösbar mit einem Rad (130) des Kinderwagens (100) verbunden zu werden,
wobei die Zelle (220; 1220) eine Aufnahme (221; 1221) zum Aufnehmen eines unteren Abschnitts des Rads (130) definiert, wobei diese Aufnahme entlang der zweiten Achse (Z-Z) in Richtung entgegengesetzt zu der ersten Seite der Sohle (210; 1210) offen ist, und die Aufnahme fest durch eine Bodenwand (222; 1222), die quer zu der zweiten Achse (Z-Z) angeordnet ist, und durch zwei Seitenwände (223; 1223), die im Wesentlichen parallel zu der ersten Achse (X-X) und zu der zweiten Achse (Z-Z) angeordnet sind, wobei sie einander entlang einer dritten Achse (Y-Y) gegenüberliegen, die senkrecht zu der ersten und zu der zweiten Achse ist, begrenzt ist,
wobei jede der zwei Seitenwände (223; 1223) mit einer Erhebung (224; 1224) versehen ist, die sich von dem Rest der entsprechenden Seitenwand in Richtung der anderen Seitenwand entlang der dritten Achse (Y-Y) hervorstehend erstreckt, und
wobei die Erhebungen (224; 1224) gemeinsam angeordnet sind, um durch Kontakt mit einem Radreifen (131) des Rads (130) zusammenzuwirken, um durch eine relative Verschiebung zwischen dem Schiebezubehör und dem Rad entlang der zweiten Achse (Z-Z) das Schiebezubehör reversibel übergehen zu lassen zwischen:
- einer Betriebskonfiguration, in der die Erhebungen (224; 1224) die Radreifen (131) entlang der zweiten Achse (Z-Z) gegen die Bodenwand (222; 1222) drücken, sodass ein unterer Abschnitt des Radreifens im unteren Teil der Aufnahme (221; 1221) verkeilt wird, um das Schiebezubehör fest mit dem Rad zu verbinden, und
- einer Außerbetriebskonfiguration, in der das Schiebezubehör von dem Rad getrennt ist, wobei der Radreifen durch die Erhebungen entlang der dritten Achse (Y-Y) elastisch zusammengedrückt wird, wenn das Schiebezubehör zwischen der Betriebs- und Außerbetriebskonfiguration übergeht.

2. Schiebezubehör nach Anspruch 1, wobei die Erhebung (224; 1224) jeder Seitenwand (223; 1223) abgeschrägt ist, um den Radreifen (131) des Rads (130) allmählich in Richtung der anderen Seitenwand zu drücken, wenn das Schiebezubehör (200; 300; 1200; 1300) von einer ihrer Betriebs- und Außerbetriebskonfiguration umgestellt wird.

3. Schiebezubehör nach Anspruch 2, wobei jede Erhebung (224; 1224) im Querschnitt zu der dritten Achse (Y-Y) ein "V"-Profil oder ein "V"-Profil, das an der Spitze des "V" abgestumpft ist, aufweist.

4. Schiebezubehör nach einem der vorherigen Ansprüche, wobei jede Erhebung (224; 1224) in Projektion entlang der dritten Achse (Y-Y) auf die entsprechende Seitenwand (223; 1223) eine gebogene Gestalt aufweist, die hin zu der Bodenwand (222; 1222) gewölbt ist.

5. Schiebezubehör nach Anspruch 4, wobei jede Erhebung (224; 1224) auf ihrer der Bodenwand (222; 1222) zugewandten Seite ein Profil aufweist, das sich an die Krümmung des Radreifens (131) anpasst, wenn das Schiebezubehör (200; 300; 1200; 1300) in Betriebskonfiguration ist.

6. Schiebezubehör nach einem der vorherigen Ansprüche, wobei jede Erhebung (224; 1224) aus mehreren Elementen (224.1, 224.2, 224.3) besteht, die entlang der ersten Achse (X-X) voneinander getrennt sind.

7. Schiebezubehör nach einem der vorherigen Ansprüche,
wobei die Aufnahme (221; 1221) auch durch eine Vorderwand (225; 1225) und eine Rückwand (226; 1226), die entlang der ersten Achse (X-X) einander gegenüberliegend angeordnet sind und die jeweils die zwei Seitenwände (223; 1223) miteinander verbinden, fest begrenzt ist, und
wobei die Vorderwand (225; 1225) und die Rückwand (226; 1226) angepasst sind, um wenn das Schiebezubehör (200; 300; 1200; 1300) in Betriebskonfiguration ist, jeweilige Anschläge entlang der ersten Achse (X-X) für den unteren Abschnitt des Rads (130) zu bilden, indem sie durch Kontakt mit dem Radreifen (131) des unteren Abschnitts des Rads zusammenwirken.

8. Schiebezubehör nach einem der vorherigen Ansprüche, wobei die Sohle (210; 1210) und die Zelle (220; 1220) aus einem Material, insbesondere aus einem Guss, miteinander geformt sind.

9. Schiebezubehör nach Anspruch 8, wobei die Sohle (210; 1210) mit Durchgangsöffnungen (216) versehen ist, die die erste und die zweite Seite der Sohle miteinander verbinden und die entlang der zweiten Achse (Z-Z) lotrecht zu den Erhebungen (224; 1224) angeordnet sind, um das Schiebezubehör (200; 300; 1200; 1300) aus der Form zu lösen.

10. Schiebezubehör nach einem der vorherigen Ansprüche, wobei die Bodenwand (222) aus einem Rohrabschnitt gebildet ist, der auf einer geometrischen Achse (Y222) parallel zu der dritten Achse (Y-Y) zentriert ist und dessen Konkavität weg von der ersten Seite der Sohle (210) gerichtet ist.

11. Schiebezubehör nach einem der Ansprüche 1 bis 9, wobei die Bodenwand (1222) im Wesentlichen eben ist, indem sie von der Sohle (1210) gebildet ist.

12. Transportanordnung (1), umfassend:
- einen Kinderwagen (100), umfassend mindestens ein Vorderrad (130) und zwei Hinterräder (140), wobei jedes Vorderrad einen Radreifen (131) aufweist, der durch Kompression elastisch verformbar ist, und
- für jedes Vorderrad ein Schiebezubehör (200; 300; 1200; 1300), das einem der vorherigen Ansprüche entspricht und das in der Betriebskonfiguration fest mit dem entsprechenden Vorderrad verbunden ist.

13. Transportanordnung nach Anspruch 12, wobei der Radreifen (131) von jedem Vorderrad (130) von einer Felge (132) des Vorderrads getragen wird und von dieser Felge an jeder der seitlichen Seiten des Vorderrads hervorsteht, wodurch zwei Wülste (135) gebildet sind, wobei die Breite des Radreifens (131) von jedem Vorderrad (130) auf Höhe der Wülste (135), wenn der Radreifen in Ruhezustand ist, einerseits kleiner als oder gleich wie der Abstand entlang der dritten Achse (Y-Y) zwischen den Seitenwänden (223; 1223) außerhalb der Erhebungen (224; 1224) und andererseits größer als der Abstand entlang der dritten Achse zwischen den Erhebungen ist,
und wobei der Abstand entlang der dritten Achse (Y-Y) zwischen den Erhebungen (224; 1224) gleich wie oder größer als die Breite der Felge (132) von jedem Vorderrad (130) ist.

14. Transportanordnung nach einem der Ansprüche 12 oder 13, wobei jedes Vorderrad (130) an einem vorderen Teil eines Rahmens (110) des Kinderwagens (100) montiert ist, indem es mit diesem vorderen Teil des Rahmens frei schwenkbar um eine Schwenkachse verbunden ist, die sich radial oder orthoradial zu der Drehachse (R130) des Vorderrads erstreckt,
und wobei, wenn das oder jedes Vorderrad (130) und das assoziierte Schiebezubehör (200; 300; 1200; 1300) in der Betriebskonfiguration fest miteinander verbunden sind, der Kinderwagen (100) durch Schwenken des oder der Vorderräder in Bezug auf den Rahmen (110) in einer Kurve manövrierbar bleibt.

15. Transportanordnung nach einem der Ansprüche 12 bis 14,
wobei das Schiebezubehör dem Anspruch 7 entspricht,
und wobei die Vorderwand (225; 1225) und die Rückwand (226; 1226) an der Mündung des Gehäuses (221; 1221) entlang der ersten Achse (X-X) mit einem Abstand voneinander beabstandet sind, der kleiner ist als der Außendurchmesser des Radreifens (131).

## Claims

1. A sliding accessory (200; 300; 1200; 1300) for a stroller (100), comprising:
- a baseplate (210; 1210), having an elongated shape along a first axis (X-X) and presenting first and second sides which are opposite each other according to a second axis (Z-Z) perpendicular to the first axis, the baseplate being provided, on the first side of the baseplate, with a snow sliding face (210A; 1210A) which is intended to be applied against a snow-covered ground, and
- a shoe (220; 1220), which is carried by the baseplate (210; 1210), being arranged on the second side of the baseplate, and which is able to be removably attached to a wheel (130) of the stroller (100),
wherein the shoe (220; 1220) defines a housing (221; 1221) for receiving a lower portion of the wheel (130), which housing is open, according to the second axis (Z-Z), in the opposite direction to the first side of the baseplate (210; 1210) and which housing is fixedly delimited by a bottom wall (222 ; 1222), which is arranged transversely to the second axis (Z-Z), and by two side walls (223; 1223) which are arranged substantially parallel to the first axis (X-X) and to the second axis (Z-Z), being arranged facing each other according to a third axis (Y-Y) which is perpendicular to the first and second axes,
wherein each of the two side walls (223; 1223) is provided with a relief (224; 1224) which projects from the remainder of the corresponding side wall toward the other side wall according to the third axis (Y-Y), and
wherein said reliefs (224; 1224) are jointly arranged to cooperate by contact with a tire (131) of the wheel (130) so as, by relative displacement between the sliding accessory and the wheel according to the second axis (Z-Z), to pass the sliding accessory reversibly between :
- an operational configuration, in which the reliefs (224; 1224) press the tire (131) against the bottom wall (222; 1222) according to the second axis (Z-Z) so as to wedge a lower portion of the tire in the lower part of the housing (221; 1221) to attach the sliding accessory to the wheel, and
- an inoperative configuration, in which the sliding accessory is detached from the wheel, the tire being elastically compressed by the reliefs according to the third axis (Y-Y) during the transition of the sliding accessory between the operational and inoperative configurations.

2. The sliding accessory according to claim 1, wherein the relief (224; 1224) of each side wall (223; 1223) is beveled so as to progressively compress the tire (131) of the wheel (130) toward the other side wall when the sliding accessory (200; 300; 1200; 1300) transitions from one of the operational and inoperative configurations to the other configuration.

3. The sliding accessory according to claim 2, wherein each relief (224; 1224) presents, in cross-section to the third axis (Y-Y), a "V"-shaped profile or a truncated "V"-shaped profile at the tip of the "V".

4. The sliding accessory according to one of the preceding claims, wherein each relief (224; 1224) presents, in projection according to the third axis (Y-Y) on the corresponding side wall (223; 1223), an arched shape which is domed toward the bottom wall (222; 1222).

5. The sliding accessory according to claim 4, wherein each relief (224; 1224) presents, on its side turned toward the bottom wall (222; 1222), a profile which matches the curvature of the tire (131) when the sliding accessory (200; 300; 1200; 1300) is in the operational configuration.

6. The sliding accessory according to any one of the preceding claims, wherein each relief (224; 1224) is constituted of a plurality of elements (224.1, 224.2, 224.3) which are separated from one another along the first axis (X-X).

7. The sliding accessory according to any one of the preceding claims,
wherein the housing (221; 1221) is also fixedly delimited by a front wall (225; 1225) and a rear wall (226; 1226), which are arranged facing one another according to the first axis (X-X) and which connect each of the two side walls (223; 1223) to one another, and
wherein the front (225; 1225) and rear (226; 1226) walls are able, when the sliding accessory (200; 300; 1200; 1300) is in the operational configuration, to form respective abutments, according to the first axis (X-X), for the lower portion of the wheel (130) by cooperating by contact with the tire (131) of the lower portion of the wheel.

8. The sliding accessory according to any one of the preceding claims, wherein the baseplate (210; 1210) and the shoe (220; 1220) are integrally formed, in particular by molding, with one another.

9. The sliding accessory according to claim 8, wherein the baseplate (210; 1210) is provided with through openings (216), which connect the first and second sides of the baseplate to one another and which are arranged inline, along the second axis (Z-Z), on the reliefs (224; 1224) for the purpose of demolding the sliding accessory (200; 300; 1200; 1300).

10. The sliding accessory according to any of the preceding claims, wherein the bottom wall (222) is formed by a portion of tube, which is centered on a geometric axis (Y222) parallel to the third axis (Y-Y) and the concave surface of which is directed away from the first side of the baseplate (210).

11. The sliding accessory according to any one of claims 1 to 9, wherein the bottom wall (1222) is substantially flat, being formed by the baseplate (1210).

12. A transport assembly (1), comprising:
- a stroller (100) comprising at least one front wheel (130) and two rear wheels (140), each front wheel having a tire (131) which is elastically deformable by compression, and
- for each front wheel, a sliding accessory (200; 300; 1200; 1300), which is according to any of the preceding claims and which, in the operational configuration, is attached to the corresponding front wheel.

13. The transport assembly according to claim 12,
wherein the tire (131) of each front wheel (130) is supported by a rim (132) of the front wheel and protrudes from this rim on each of lateral sides of the front wheel, thus forming two beads (135),
wherein the width of the tire (131) of each front wheel (130) at the level of the beads (135) while the tire is at rest is both less than or equal to a spacing, according to the third axis (Y-Y), between the side walls (223; 1223) outside the reliefs (224; 1224) and greater than a spacing, according to the third axis, between the reliefs,
and wherein the spacing, along the third axis (Y-Y), between the reliefs (224; 1224) is equal to or greater than the width of the rim (132) of each front wheel (130).

14. The transport assembly according to one of claims 12 or 13,
wherein each front wheel (130) is mounted on a front part of a frame (110) of the stroller (100), being connected to this front part of the frame so as to be freely pivotable about a pivot axis which extends radially or orthoradially to the axis of rotation (R130) of the front wheel,
and wherein, when the or each front wheel (130) and the associated sliding accessory (200; 300; 1200; 1300) in the operational configuration are attached to each other, the stroller (100) remains maneuverable in turns by pivoting the front wheel or wheels relative to the chassis (110).

15. The transport assembly according to any one of claims 12 to 14,
wherein the sliding accessory is according to claim 7,
and wherein the front (225; 1225) and rear (226; 1226) walls are, at a mouth of the housing (221; 1221), distant from one another along the first axis (X-X) with a spacing less than the outer diameter of the tire (131).
